# EUROPEAN PATENT SPECIFICATION

(11) **EP 2 475 867 B1**
(45) Date of publication and mention of the grant of the patent: **23.07.2014**
(21) Application number: 10742152.1
(22) Date of filing: 12.08.2010
(51) Int. Cl.: F02M 37/22, B01D 36/00

(54) **DEVICE FOR REDUCING DIMENSIONS OF AIR BUBBLES IN DIESEL FUEL SUPPLIED TO ENGINES**
VORRICHTUNG ZUR REDUZIERUNG VON ABMESSUNGEN VON LUFTBLASEN IN DER IN BRENNKRAFTMASCHINEN EINGESETZTEN DIESELKRAFTSTOFFE
DISPOSITIF PERMETTANT DE RÉDUIRE LES DIMENSIONS DES BULLES D'AIR DANS LE CARBURANT DIESEL INTRODUIT DANS LES MOTEURS

(30) Priority: 08.09.2009 IT RE20090087
(43) Date of publication of application: 18.07.2012
(73) Proprietor: Ufi Filters s.p.a., 46047 Porto Mantovano (Mantova) (IT)
(72) Inventor: GIRONDI, Giorgio, I-46100 Mantova (IT)
(74) Representative: Corradini, Corrado
(86) International application number: PCT/EP2010/061747
(87) International publication number: WO 2011/029689

(56) References cited:
- EP-A1- 0 547 951
- EP-A2- 0 657 198
- FR-A1- 2 851 477
- KR-A- 20090 052 451

## Description

### Technical field

The invention relates to a device for reducing dimensions, or micronisation, of air bubbles that are present in diesel fuel being supplied to engines.

More in general, the invention can be applied to diesel filters or fuel supply systems for diesel engines.

### Background Art

In these applicational fields there is a flow of diesel which contains dissolved therein a certain quantity of substances in the gassy state, which in the following will be termed "air" for the sake of simplicity.

The air present in diesel fuel, due to its lower specific weight than the diesel, tends to accumulate in the top part of the chamber containing the filter element and must therefore be removed during the functioning of the filter.

In order to obviate the problem devices exist in the prior art which are constituted by a net that is crossed by the flow of diesel and air and tends to break the air bubbles, which results in having smaller bubbles in outlet than those in inlet.

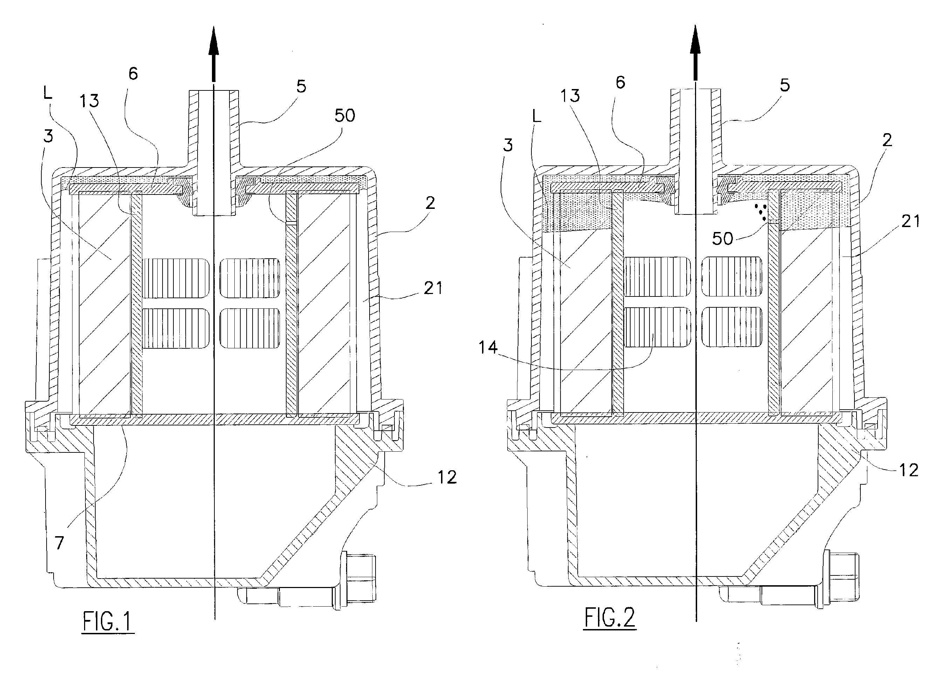

In another known solution at least a radial hole is made in the support element of the filter element, as shown in appended figures 1 and 2 in relation to the prior art, where the radial hole is denoted with reference number 50 and the air level with L.

This known solution is not however satisfactory as it is accompanied, apart from by a build-up of air in the upper part of the filter, also by a further build-up of air in the internal chamber of the filter cartridge (figure 2), thus causing, when the air level reaches the outlet hole, sudden entry of large bubbles into the diesel fuel in delivery, leading to problems in the organs downstream of the filter, in particular the high-pressure pump and the injectors.

Patent publication KR 2009 005 245 A1 discloses a filter for diesel fuel according to the preamble of claim 1.

### Summary

An aim of the present invention is to obviate the above-mentioned drawbacks, by means of a device which reduces the size of the air bubbles in the diesel up until they reach such small dimensions as not to cause problems to the organs situated downstream of the filter.

A further aim of the invention is to realise a device for reducing the size of the air bubbles in the diesel, which device can be integrated with the common components of the filter cartridge.

A still further aim of the invention is to attain the above result in a way which is advantageous and economical.

The aims are attained by a filter for diesel fuel according to claim 1.

Further characteristics of the invention can be deduced from the dependent claims.

### Brief description of the drawings

Further characteristics and advantages of the invention will emerge from a reading of the following description, which is provided by way of non-limiting example, with the aid of the figures illustrated in the accompanying figures of the drawings, in which:
figures 1 and 2 illustrate, in a section along a vertical plane, a filter for diesel fuel according to the prior art;
figure 3 illustrates, in a section along a vertical plane, a filter for diesel fuel provided with a realisation according to present invention;
figure 4 is a further section along plane IV-IV of figure 3 of the filter for diesel fuel which is mounted on the device of the invention;
figure 5 is the same section as figure 3, showing a first air level inside the filter; and
figure 6 shows the functioning of the device of the invention on reaching an appropriate level of air internally of the filter.

### Detailed description

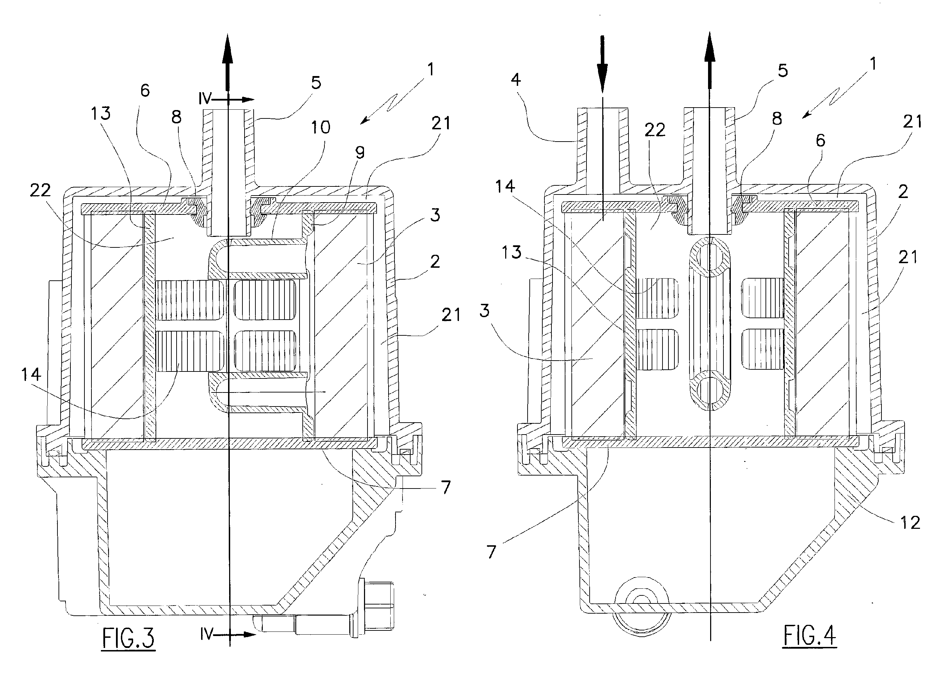

Figures 3-6 show a filter for diesel, denoted in its entirety by number 1, destined to be installed on an internal combustion engine and mounting the device of the invention.

The filter comprises an external casing 2, generally beaker-shaped and fixed to a base 12; the casing 2 contains a toroidal filter element 3 having an external diameter which is smaller than an internal diameter of the casing 2. In this way the internal cavity of the beaker 2 is subdivided into an annular external chamber 21 comprised between the beaker 2 and the filter element 3, and in an internal cylindrical chamber 22 afforded by the central longitudinal zone crossing the filter element 3.

An inlet conduit 4 of the diesel to be filtered opens into the external chamber 21, and the internal chamber 22 communicates with an outlet conduit 5 of the filtered liquid diesel which is afforded on the upper part of the casing 2.

The filter element 3 is inserted on and supported by a cylindrical support element 13 and is comprised between an upper plate 6 and a lower plate 7 and the upper plate 6 is fixed by a bushing 8 to a lower portion of the outlet conduit 5 of the diesel.

The support element 13 further comprises windows 14 for enabling passage of the filtered diesel towards the internal chamber 22.

According to the invention, the device for reducing the dimensions of the air bubbles present in the diesel includes at least an air conveyor chamber 10, which is defined by a bulge of the cylindrical support element 13, which is integral with the cylindrical support element 13 and which protrudes towards the inside of the internal chamber 22.

The air conveyor chamber 10 is provided with at least a small hole 11, situated close to the outlet flow of the diesel and from which the air can exit in order to enter the diesel in the form of small bubbles.

The air conveyor chamber 10 is connected to a portion 9 of the support element 13, which forms a physical barrier for the air in proximity of the upper plate 6.

Preferably there is a single hole 11 in the conveyor chamber, but realisations with more than one hole, located side-by-side, are possible.

In particular, the hole 11 is preferably realised on the vertical of the outlet conduit 5 of the filtered liquid diesel and at a short distance from the mouth thereof, such as to facilitate the outlet of the air bubbles.

The hole 11 preferably has a truncoconical development with the smaller base in a distal position with respect to the outlet conduit 5 of the diesel and the larger base in a proximal position to the outlet conduit 5.

The diameter of the smaller base of the hole 11 can preferably be made in intervals comprised between 0.5mm and 2mm.

To facilitate the industrialising operations of the device of the invention, given the symmetry of the filter element, two air-bubble size reduction devices can be provided, integrated with the filter, which devices are reciprocally symmetrical such as to prevent any mounting errors.

In a preferred embodiment (figure 4) the air conveyor chamber 10 exhibits, in section along a vertical plane, a circular profile which leaves open spaces suitable for the outflow of the filtered diesel.

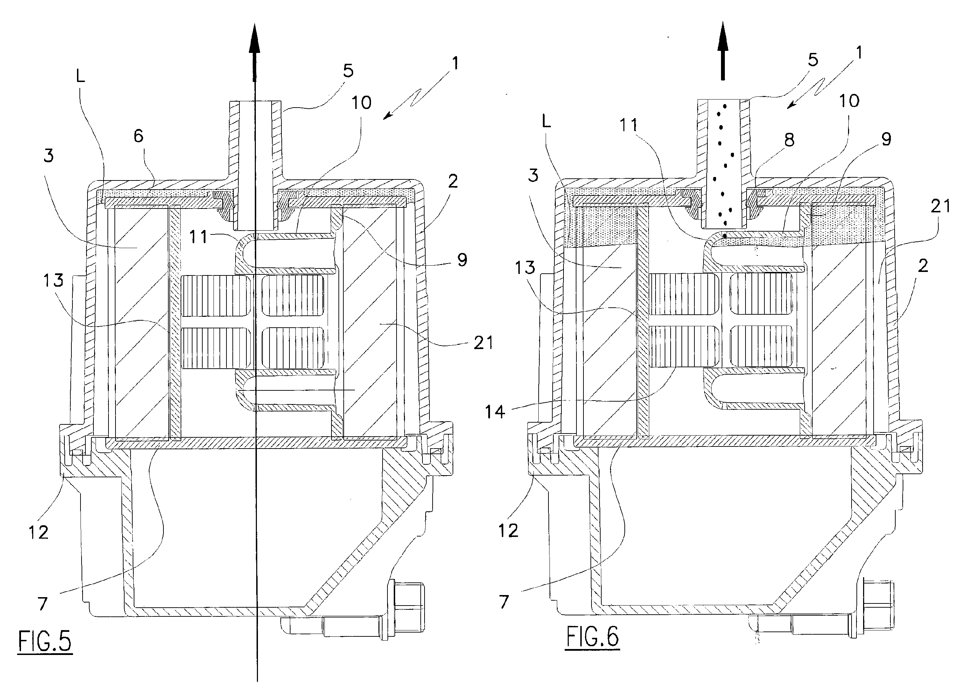

During functioning of the device (figures 5-6), the air present in the diesel tends to accumulate up to reaching a determined level L in the high part of the chamber 21 containing the filter element 3, due to its lower specific weight in comparison to diesel. The device prevents the air from outflowing downstream by means of the physical barrier 9. When the volume of air retained in this way increases it tends to enter the air conveyor chamber 10 and from there passes through the hole 11 and can exit in order to enter the diesel in the form of small bubbles.

The invention exhibits the following important advantages.

Firstly it offers the possibility of removing the air accumulated internally of the filter cartridge chamber by the injection of bubbles into the delivering filtered diesel which bubbles are sufficiently small such as not to cause problems downstream of the filter. Further, this device can be integrated with common components of a filter cartridge and/or a filter, such as for example the support element of the filter element, with obvious advantages linked to the optimisation of the total number of components necessary.

Thus air accumulation in the internal chamber of the filter cartridge is avoided as are the relative unforeseen injections of large-dimension bubbles into the delivering diesel.

Obviously modifications or improvements may be made to the invention as described herein, dictated by contingencies or special situations, without its forsaking the ambit of the invention as described in the appended claims.

## Claims

1. A filter for diesel fuel having at least an inlet conduit (4) opening into an external chamber (21) and an outlet conduit (5) of the diesel in communication with an internal chamber (22), and being provided with at least a toroidal filter element (3) inserted on and supported by a cylindrical support element (13), the filter further comprising a device for reducing dimensions of air bubbles present in the diesel fuel, wherein the device comprises at least an air conveyor chamber (10) associated to the cylindrical support element (13), and wherein the air conveyor chamber (10) is provided with at least a hole (11) from which the air accumulated in the filter can exit in order to enter, in a form of small bubbles, a flow of the diesel fuel in outlet from the filter, wherein the air conveyor chamber (10) is defined by a bulge of the cylindrical support element (13), which protrudes towards the inside of the cylindrical support element (13), **characterized in that** the air conveyor chamber (10) extends into the internal chamber (22) perpendicularly to a centre axis of the cylindrical support element (13), the air conveyor chamber (10) having a radially elongated form with the aperture for allowing introduction of air at the connecting surface with the cylindrical support element (13).

2. The filter of claim 1, wherein the air conveyor chamber (10) is connected to a portion (9) of the cylindrical support element (13) destined to form a physical barrier in proximity of an upper plate (6) associated to the filter element (3) for conveying the air internally of the air conveyor chamber (10).

3. The filter of claim 1, wherein the hole (11) is realised on a vertical part of the outlet conduit (5) of the filtered liquid diesel, such as to facilitate outlet of the air bubbles.

4. The filter of claim 1, wherein the hole (11) develops truncoconically with a smaller base thereof in a distal position with respect to the outlet conduit (5) of the diesel and a larger base thereof in a proximal position to the conduit (5).

5. The filter of claim 4, wherein a diameter of the smaller base of the hole (11) is selected in intervals comprised between 0.5 mm and 2 mm.

6. The filter of claim 1, wherein the air conveyor chamber (10) exhibits, in section along a vertical plane, a circular profile which leaves open spaces suitable for outflow of the filtered diesel.

## Patentansprüche

1. Filter für Dieselkraftstoff mit mindestens einer Einlassleitung (4), die in eine Außenkammer (21) mündet, und einer Auslassleitung (5) für den Diesel in Verbindung mit einer Innenkammer (22), der mit mindestens einem torusförmigen Filterelement (3) versehen ist, das auf ein zylindrisches Trägerelement (13) aufgesetzt ist und von diesem getragen wird, wobei der Filter ferner eine Vorrichtung zum Reduzieren von Abmessungen von im Dieselkraftstoff vorhandenen Luftblasen umfasst, wobei die Vorrichtung mindestens eine Luftförderkammer (10) umfasst, die zu dem zylindrischen Trägerelement (13) gehört, und wobei die Luftförderkammer (10) mit mindestens einer Öffnung (11) versehen ist, von der die im Filter angesammelte Luft austreten kann, um in Form kleiner Blasen in einen Strom des Dieselkraftstoffs im Auslass aus dem Filter einzutreten, wobei die Luftförderkammer (10) durch eine Ausbuchtung des zylindrischen Trägerelements (13) definiert ist, die zum Inneren des zylindrischen Trägerelements (13) hervorsteht, **dadurch gekennzeichnet, dass** sich die Luftförderkammer (10) senkrecht zu einer Mittelachse des zylindrischen Trägerelements (13) in die Innenkammer (22) hinein erstreckt, wobei die Luftförderkammer (10) eine radial gestreckte Form mit der Öffnung zum Ermöglichen des Einführens von Luft an der Verbindungsfläche zum zylindrischen Trägerelement (13) aufweist.

2. Filter nach Anspruch 1, wobei die Luftförderkammer (10) mit einem Abschnitt (9) des zylindrischen Trägerelements (13) verbunden ist, der dafür vorgesehen ist, eine physische Barriere in der Nähe einer zu dem Filterelement (3) gehörigen oberen Platte (6) zu bilden, um die Luft im Inneren der Luftförderkammer (10) zu fördern.

3. Filter nach Anspruch 1, wobei die Öffnung (11) an einem vertikalen Teil der Auslassleitung (5) für den gefilterten flüssigen Diesel realisiert ist, so dass sie den Auslass der Luftblasen erleichtert.

4. Filter nach Anspruch 1, wobei die Öffnung (11) kegelstumpfförmig verläuft, mit einer kleineren Basis davon an einer distalen Position in Bezug zur Auslassleitung (5) für den Diesel und einer größeren Basis davon an einer proximalen Position in Bezug auf die Leitung (5).

5. Filter nach Anspruch 4, wobei ein Durchmesser der kleineren Basis der Öffnung (11) in Intervallen gewählt ist, die zwischen 0,5 mm und 2 mm liegen.

6. Filter nach Anspruch 1, wobei die Luftförderkammer (10) im Schnitt entlang einer vertikalen Ebene ein kreisrundes Profil aufweist, das Freiräume lässt, die für das Ausströmen des gefilterten Diesels geeignet sind.

## Revendications

1. Filtre pour combustible diesel comportant au moins un conduit d'entrée (4) qui s'ouvre dans une chambre externe (21) et un conduit de sortie (5) du diesel en communication avec une chambre interne (22), et pourvu d'au moins un élément de filtre toroïdal (3) inséré sur et supporté par un élément de support cylindrique (13), le filtre comprenant en outre un dispositif pour réduire les dimensions de bulles d'air présentes dans le combustible diesel, dans lequel le dispositif comprend au moins une chambre de convoyeur d'air (10) associée à l'élément de support cylindrique (13), et dans lequel la chambre de convoyeur d'air (10) est pourvue d'au moins un trou (11) par lequel l'air accumulé dans le filtre peut sortir pour entrer, sous forme de petites bulles, dans un débit de combustible diesel à la sortie du filtre, dans lequel la chambre de convoyeur d'air (10) est définie par une protubérance de l'élément de support cylindrique (13), qui ressort vers l'intérieur de l'élément de support cylindrique (13), **caractérisé en ce que** la chambre de convoyeur d'air (10) s'étend dans la chambre interne (22) perpendiculairement à un axe central de l'élément de support cylindrique (13), la chambre de convoyeur d'air (10) présentant une forme allongée radialement avec l'ouverture d'introduction d'air sur la surface de connexion avec l'élément de support cylindrique (13).

2. Filtre selon la revendication 1, dans lequel la chambre de convoyeur d'air (10) est connectée à une partie (9) de l'élément de support cylindrique (13) destiné à former une barrière physique à proximité d'une plaque supérieure (6) associée à l'élément de filtre (3) pour convoyer l'air de la chambre de convoyeur d'air (10) de manière interne.

3. Filtre selon la revendication 1, dans lequel le trou (11) est réalisé sur une partie verticale du conduit de sortie (5) du diesel liquide filtré, de manière à faciliter la sortie des bulles d'air.

4. Filtre selon la revendication 1, dans lequel le trou (11) se développe selon un tronc de cône avec une base plus petite dans une position distale par rapport au conduit de sortie (5) du diesel et une base plus grande dans une position proximale par rapport au conduit (5).

5. Filtre selon la revendication 4, dans lequel le diamètre de la plus petite base du trou (11) est sélectionné à des intervalles compris entre 0,5 mm et 2 mm.

6. Filtre selon la revendication 1, dans lequel la chambre de convoyeur d'air (10) présente, en section selon un plan vertical, un profil circulaire qui laisse des espaces ouverts appropriés pour la sortie du diesel filtré.
